# EUROPÄISCHE PATENTANMELDUNG

(11) **EP 3 403 723 A1**
(43) Veröffentlichungstag der Anmeldung: **21.11.2018**
(21) Anmeldenummer: 17172042.8
(22) Anmeldetag: 19.05.2017
(51) Int. Cl.: B01J 37/10, B01J 37/14, B01J 38/06, B01J 38/12, B01J 38/42, B01J 23/96, C01B 7/04

(54) **VERFAHREN ZUR REGENERATION EINES VERGIFTETEN, RUTHENIUM ODER RUTHENIUMVERBINDUNGEN ENTHALTENDEN KATALYSATORS**

(71) Anmelder: Covestro Deutschland AG, 51373 Leverkusen (DE)
(72) Erfinder: RITTERMEIER, Andre, 44809 Bochum (DE); VENZ, Michael, 41540 Dormagen (DE); BURBACH, Thomas, 50181 Bedburg (DE); SCHMIDT, Timm, 41472 Neuss (DE); LODDENKEMPER, Tim, 41542 Dormagen (DE); GERHARTZ, Frank, 51381 Leverkusen (DE); MÜLLER, Walther, 50259 Pulheim (DE)
(74) Vertreter: Levpat

(57) **Zusammenfassung**

Es wird ein Verfahren zur Regeneration eines Ruthenium oder Rutheniumverbindungen enthaltenden Katalysators, der durch Schwefelverbindungen vergiftet ist, beschrieben, in dem der Katalysator gegebenenfalls bei erhöhter Temperatur einer Behandlung mit einem Halogenwasserstoff, insbesondere Chlorwasserstoff enthaltenden Gasstrom unter nicht oxidativen Bedingungen und zusätzlich, gegebenenfalls bei verringerter Temperatur, einer mindestens zweistufigen oxidativen Nachbehandlung unterzogen wird.

## Beschreibung

Die Reaktion mit Schwefelverbindungen führt bei Ruthenium oder Rutheniumverbindungen enthaltenden Katalysatoren bei vielen typischen Anwendungen zu einer irreversiblen Reduzierung der Aktivität, die nach gängiger Meinung auf eine Vergiftung zurückzuführen ist. Die vorliegende Erfindung betrifft ein Verfahren, mit dem der Schwefelgehalt eines mit Schwefel in Form von Schwefelverbindungen vergifteten, Ruthenium oder Rutheniumverbindungen enthaltenden Katalysators durch eine gezielte Behandlung mit einem Chlorwasserstoff enthaltenden Strom unter nicht oxidativen Bedingungen soweit reduziert werden kann, dass dessen Aktivität auf die Aktivität eines gleichartigen Katalysators ansteigt, der nicht mit Schwefel in Form von Schwefelverbindungen vergiftet ist. Zusätzlich wird der Katalysator nach der Schwefelentfernung einer oxidativen Nachbehandlung unterzogen. Der Erfolg dieser Regeneration wird am Beispiel der katalytischen Oxidation von Chlorwasserstoff mit Sauerstoff und an der Oxidation von Kohlenstoffmonoxid mit Sauerstoff demonstriert.

Ein typisches Anwendungsgebiet für einen Ruthenium oder Rutheniumverbindungen enthaltenden Katalysator ist die Herstellung von Chlor durch Gasphasenoxidation von Chlorwasserstoff mit Sauerstoff:

4 HCl + O₂ ⇒ 2 Cl₂ + 2 H₂O

Diese Reaktion ist eine Gleichgewichtsreaktion. Die Lage des Gleichgewichts verschiebt sich mit zunehmender Temperatur zu Ungunsten des gewünschten Endproduktes. Es ist daher vorteilhaft, Katalysatoren mit möglichst hoher Aktivität einzusetzen, die die Reaktion bei niedriger Temperatur ablaufen lassen.

Erste Katalysatoren für die Chlorwasserstoffoxidation enthielten als aktive Komponente Kupferchlorid bzw. -oxid und wurden schon 1868 von Deacon beschrieben. Diese wiesen jedoch bei niedriger Temperatur (< 400°C) nur geringe Aktivitäten auf. Durch eine Erhöhung der Reaktionstemperatur konnte zwar deren Aktivität gesteigert werden, nachteilig war jedoch, dass die Flüchtigkeit der Aktivkomponenten zu einer schnellen Deaktivierung führte.

Da bis in die 60-er Jahre des 20-ten Jahrhunderts trotz immenser Forschungsaktivitäten auf diesem Gebiet keine wesentlichen Fortschritte erzielt werden konnten, wurde das nach dem Entdecker benannte Deacon-Verfahren durch die Chloralkalielektrolyse in den Hintergrund gedrängt. Bis in die 90er Jahre erfolgte nahezu die gesamte Produktion von Chlor durch Elektrolyse wässriger Kochsalzlösungen [Ullmann Encyclopedia of industrial chemistry, seventh release, 2006]. Da der weltweite Chlorbedarf jedoch aktuell stärker wächst als die Nachfrage nach Natronlauge, ist die Attraktivität des Deacon-Verfahrens ungebrochen, da hierdurch Chlorwasserstoff für die Herstellung von Chlor wiederverwertet werden kann, welcher in großen Mengen beispielsweise bei der Phosgenierung von Aminen als Koppelprodukt anfällt.

Ein wesentlicher Fortschritt auf dem Gebiet der Chlorwasserstoffoxidation wurde durch die Entdeckung von Ruthenium bzw. Rutheniumverbindungen als katalytisch aktive Komponenten erzielt, welche zum ersten Mal 1965 in DE 1567788 beschrieben wurden. Insbesondere bei der Bereitstellung eines geeigneten Trägers wurden seitdem große Fortschritte erzielt. Als Träger besonders geeignet scheint Titandioxid, dessen Anwendung beispielsweise in der Anmeldung EP 743277 A1 beschrieben wird und Zinndioxid, dessen Anwendung beispielsweise aus der Anmeldung DE 10 2006 024 543 A1 ersichtlich ist.

Weitere typische Anwendungsgebiete für Ruthenium oder Rutheniumverbindungen enthaltende Katalysatoren sind die (selektive) Oxidation von Kohlenstoffmonoxid und die Abluftreinigung. US 7 247 592 B2 beschreibt einen Ruthenium bzw. Rutheniumverbindungen enthaltenden Katalysator für die selektive Oxidation von Kohlenstoffmonoxid. Aus US 7 318 915 B2 ist die Anwendung von Ruthenium bzw. Rutheniumverbindungen enthaltenden Katalysatoren für den kombinierten Einsatz im Bereich der Abluftbehandlung bekannt. Dabei oxidiert der beschriebene Katalysator Kohlenstoffmonoxid und flüchtige Kohlenwasserstoffe, während nitrose Gase gleichsam reduziert werden.

Es ist noch eine Vielzahl von weiteren Anwendungen für Ruthenium oder Rutheniumverbindungen enthaltende Katalysatoren bekannt. Insbesondere bei der Synthese von organischen Grundstoffen aus Erdölfraktionen, Erdgas oder Kohle nehmen Ruthenium oder Rutheniumverbindungen enthaltende Katalysatoren oft eine Schlüsselrolle ein.

Ein großes Problem beim Einsatz von Ruthenium oder Rutheniumverbindungen enthaltenden Katalysatoren ist offensichtlich deren Sensibilität gegenüber einer Vergiftung mit Schwefel. Eine Schwefelfracht im Eingangsstrom kann z. B. durch Schwefel enthaltende Rohstoffe (z.B. Erdölfraktionen, Erdgas, Kohle) oder vorgelagerte Prozesse (z.B. Gastrocknung mit Schwefelsäure, schwefelhaltige Aktivkohle) aufgeprägt sein. Aus WO 2007 066 810 A1 ist z. B. bekannt, dass es für die Standzeit eines Ruthenium bzw. Rutheniumverbindungen enthaltenden Katalysators für die Chlorwasserstoffoxidation von entscheidender Bedeutung ist, die Schwefelfracht im Eingangsstrom auf unter 2 ppm abzusenken. Zur Reduzierung der Schwefelfracht werden in dieser Anmeldung diverse Oxide beschrieben, an denen Schwefelkomponenten reaktiv abgeschieden werden. Ein Nachteil dieses Verfahrens ist, dass flüchtige Chloride dieser Elemente auf den Katalysator verschleppt werden können oder eine Spitzenbelastung in der Schwefelfracht zu einem Durchbruch von Schwefelverbindungen führen kann.

Es wurden schon Verfahren zur Regeneration von mit Schwefel in Form von Schwefelverbindungen vergifteten, Ruthenium bzw. Rutheniumverbindungen enthaltenden Katalysatoren beschrieben, die jedoch mit vielerlei Nachteilen behaftet sind. Aus GB 744 049 A ist bekannt, dass mit Schwefel in Form von Schwefelverbindungen vergiftete, Ruthenium bzw. Rutheniumverbindungen enthaltende Katalysatoren durch eine Wäsche regeneriert werden können. Als Beispiele für die Waschflüssigkeit werden Wasser, Ethanol, Essigsäure, Cyclohexen, Benzol und Aceton genannt. Eine Wäsche birgt jedoch immer das Risiko, dass ein Teil der Aktivkomponenten mit der Waschflüssigkeit ausgetragen wird. Dies kann sowohl durch chemischphysikalische Prozesse (z. B. Reaktion + Absorption, Löslichkeit) als auch durch mechanische Prozesse (z. B. Abrieb) geschehen. Des Weiteren muss der Katalysator für eine Wäsche im Regelfall aus dem für die Zielreaktion eingesetzten Reaktor ausgebaut werden.

GB 1 278 119 A beschreibt die Regeneration eines mit Schwefel in Form von Schwefelverbindungen vergifteten, Ruthenium bzw. Rutheniumverbindungen enthaltenden Katalysators durch eine reduzierende Behandlung mit einem wasserfreien Wasserstoffstrom bei 430 bis 595°C, einem Druck zwischen 3 und 24 bar und einigen weiteren Oxidations- und Reduktionsschritten. Eine derartige Kombination aus reduzierenden Bedingungen und hohen Temperaturen wird zu einer weitgehenden Reduktion von Rutheniumoxiden (sofern vorher vorhanden) zu metallischem Ruthenium bis in tiefere Schichten führen. Durch diese Behandlung wird der Ruthenium bzw. Rutheniumverbindungen enthaltende Katalysator drastischen Veränderungen unterworfen sein, die für manche Anwendungen womöglich unerwünscht sind. Auch müssen für diese Anwendung druckfeste Reaktoren, Rohrleitungen und Armaturen zur Verfügung stehen, weshalb der Katalysator für diese Behandlung im Regelfall ausgebaut werden müsste.

US 4 851 380 A beschreibt einen Prozess zur Regenerierung von Kohlenstoff- und Schwefelkontaminierten monofunktionalen, großporigen Zeolith-Reformingkatalysatoren. Darin wird ein Platinkatalysator zuerst einer Agglomerierungsprozedur in Sauerstoff-haltigem Gas bei 900 - 1200 °F unterzogen und anschließend einer Oxichlorierungs-Behandlung bei 800 - 1200 °F. In der Anmeldung wird beschrieben, dass dieses Prozedere auf alle Elemente der Nebengruppe VIII, vorzugsweise Platin, Rhodium, Ruthenium, Iridium oder Osmium, angewendet werden kann. Sowohl die Agglomerierungsprozedur als auch die Behandlung bei Temperaturen über 800 °F können bei Ruthenium bzw. Rutheniumverbindungen enthaltenden Katalysatoren zu drastischen Veränderungen und Schädigungen führen, die für manche technische Anwendungen unerwünscht sind.

WO 2009 118 095 A3 beschreibt ein Verfahren, mit dem der Schwefelgehalt eines mit Schwefel in Form von Schwefelverbindungen vergifteten, Ruthenium oder Rutheniumverbindungen enthaltenden Katalysators durch eine gezielte Behandlung mit einem Chlorwasserstoff enthaltenden Strom unter nicht oxidativen Bedingungen soweit reduziert werden kann, dass dessen Aktivität auf die Aktivität eines gleichartigen Katalysators ansteigt, der nicht mit Schwefel in Form von Schwefelverbindungen vergiftet ist. Nach der dieser Behandlung liegt der Ruthenium oder Rutheniumverbindungen enthaltende Katalysator jedoch chloriert oder oberflächlich chloriert in Form einer chlorierten oder oxychlorierten Rutheniumverbindung oder oberflächlich chlorierten oder oxychlorierten Rutheniumverbindung vor. Dies kann dazu führen, dass beim erneuten Anfahren des Katalysators unter Reaktionsbedingungen Ruthenium in Form von flüchtigen Rutheniumverbindungen das Katalysatorbett verlässt, was langfristig einen negativen Effekt auf die Leistung des Katalysators hat.

WO 2010 076 296 A1 beschreibt ein Verfahren zur Regenerierung eines Chlorwasserstoff-Oxidationskatalysators enthaltend Rutheniumoxid auf einem Trägermaterial, umfassend die Schritte a) Reduzieren des Katalysators mit einem Gasstrom enthaltend Chlorwasserstoff und gegebenenfalls ein Inertgas bei einer Temperatur von 100 bis 800 °C, b) Rekalzinieren des Katalysators mit einem Sauerstoff enthaltenden Gasstrom bei einer Temperatur von 150 bis 800°C.

Durch das Rekalzinieren des Katalysators in Schritt b) wird der in Schritt a) chlorierte oder oberflächlich chlorierte Rutheniumoxid Katalysator reoxidiert, was die Bildung von flüchtigen Rutheniumverbindungen beim erneuten Anfahren des Katalysators unter Reaktionsbedingungen unterbindet oder zumindest verringert. Jedoch wird es durch das schlagartige Rekalzinieren in Schritt b), also das schlagartige Hinzugeben von Sauerstoff, zu einer schlagartigen Reoxidation des chlorierten Rutheniumoxid Katalysators kommen. Da die Oxidation von Metallen ein exothermer Prozess ist, wird die schlagartig erzeugte Oxidationswärme zu einem starken, lokalem Anstieg der Temperatur führen, was wiederum zu einer Versinterung des Rutheniumoxids, also zu einer Verringerung der aktiven Oberfläche des Katalysators und somit langfristig zu einer Verringerung der Leistung des Katalysators führt.

Es ist demzufolge noch kein Verfahren entwickelt worden, mit dem die Regeneration eines mit Schwefel in Form von Schwefelverbindungen vergifteten, Ruthenium oder Rutheniumverbindungen enthaltenden Katalysators unter milden Bedingungen möglich ist, welches langfristig die Aktivität des Katalysators auf die Aktivität eines gleichartigen Katalysators ansteigen lässt, der nicht mit Schwefel in Form von Schwefelverbindungen vergiftet ist. Die bisher bekannten Verfahren bergen alle das Risiko eines partiellen Verlustes von Ruthenium oder einer unerwünschten Veränderung der Katalysatorstruktur. Demzufolge ist eine schleichende Vergiftung eines Ruthenium oder Rutheniumverbindungen enthaltenden Katalysators durch Schwefel in Form von Schwefelverbindungen bei vielen Verfahren immer noch ein begrenzender Faktor für die Laufzeit. Ein schlagartiger, irreversibler Aktivitätsverlust durch einen ungewollten Peak in der Schwefelfracht (z.B. aufgrund instationärer Anfahrprozesse) stellt ein Worst-Case Szenario dar. Beide Faktoren bergen ein enormes wirtschaftliches Risiko, da die Wiedergewinnung des Rutheniums von einem gebrauchten, Katalysator aufwändig ist und ein partieller Ruthenium-Verlust einkalkuliert werden muss.

Die Aufgabe dieser Erfindung ist es somit ein langfristig effektives, schonendes und einfaches Verfahren zur Regeneration eines mit Schwefel in Form von Schwefelverbindungen vergifteten, Ruthenium oder Rutheniumverbindungen enthaltenden Katalysators bereitzustellen.

Überraschenderweise wurde gefunden, dass der Schwefelgehalt eines mit Schwefel in Form von Schwefelverbindungen vergifteten, Ruthenium oder Rutheniumverbindungen enthaltenden Katalysators durch eine gezielte Behandlung mit einem Halogenwasserstoff, insbesondere Chlorwasserstoff enthaltenden Gasstroms unter nicht oxidativen Bedingungen bei gegebenenfalls erhöhter Temperatur soweit reduziert werden kann, dass dessen Aktivität auf die Aktivität eines gleichartigen Katalysators ansteigt, der nicht mit Schwefel in Form von Schwefelverbindungen vergiftet wurde.

Zudem wurde gefunden, dass eine anschließende sanfte, oxidative Nachbehandlung insbesondere bestehend aus einem ersten Prozessschritt, welcher aus der Behandlung mit einem Dampf enthaltenden Gasstrom zu einem sanften Anoxidieren des Katalysators führt und zudem noch die Schwefelverbindungen, die nach der gezielten Behandlung mit einem Halogenwasserstoff, insbesondere Chlorwasserstoff enthaltenden Gasstrom entstanden sind, aus dem Reaktor und den nachfolgenden Rohrleitungen und Apparaten entfernt und einem zweiten Prozessschritt, welcher aus einer gezielten Behandlung mit einem Sauerstoff enthaltenden Strom besteht, dessen Konzentration bevorzugt sequentiell erhöht wird, den Katalysator vorsichtig, möglichst vollständig durchoxidiert, was einen langfristigen Erfolg der Regeneration zur Folge hat.

Gegenstand der Erfindung ist ein Verfahren zur Regeneration eines Ruthenium oder Ruthenium-verbindungen enthaltenden Katalysators, der durch Schwefel in Form von Schwefelverbindungen vergiftet ist, dadurch gekennzeichnet, dass der Katalysator gegebenenfalls bei erhöhter Temperatur einer Behandlung mit einem Halogenwasserstoff, insbesondere Chlorwasserstoff enthaltenden Gasstrom unter nicht oxidativen Bedingungen unterzogen wird und zusätzlich, gegebenenfalls bei verringerter Temperatur, einer mindestens zweistufigen oxidativen Nachbehandlung unterzogen wird, wobei in einem ersten Prozessschritt der Katalysator durch Behandlung mit einem Dampf enthaltenden Gasstrom teilweise oxidiert und in einem zweiten Prozessschritt der Katalysator durch Behandlung mit einem Sauerstoff enthaltenden Gasstrom, dessen Sauerstoff-Konzentration bevorzugt sequentiell erhöht wird, weiter oxidiert wird, bevorzugt vollständig oxidiert wird.

In den folgenden Abschnitten wird die Wortwendung "Regeneration eines mit Schwefel vergif teten, Ruthenium oder Rutheniumverbindungen enthaltenden Katalysators" auch verkürzt als Katalysatorregeneration, Regeneration oder mit ähnlichen Wortwendungen beschrieben. Die erfindungsgemäße Anwendung kann bei der Regeneration von Katalysatoren sowohl auf Basis von Rutheniummetall als auch von Rutheniumverbindungen eingesetzt werden. Bevorzugte Rutheniumverbindungen sind Rutheniumhalogenide, insbesondere Rutheniumchloride, Rutheniumoxidhalogenide, insbesondere Rutheniumoxidchloride, oder Rutheniumoxide die einzeln oder in Mischung vorliegen können. Hierbei wird zur Regeneration der Chlor enthaltenden Rutheniumverbindungen bevorzugt Chlorwasserstoff zur Regeneration benützt.

Ein Katalysator gilt insbesondere dann als vergiftet im Sinne der Erfindung wenn seine Aktivität, gemessen am Umsatz des mit Schwefel in Form von Schwefelverbindungen vergifteten Ruthenium oder Rutheniumverbindungen enthaltenden Katalysators (Betriebskatalysator) im differentiellen Umsatzbereich der katalysierten Reaktion (Umsatz <= 10%) insbesondere um mindestens 5%, bevorzugt um mindestens 10%, besonders bevorzugt um mindestens 20% gesunken ist. In einer möglichen bevorzugten Ausführung wird zur Bestimmung des Aktivitätsverlusts ein kleiner Seitenstrom vom einzuspeisenden Hauptstrom abgetrennt und über ein separates Katalysatorbett mit dem selben Katalysatormaterial geführt, bei dem durch geeignete Wahl der Kontaktzeit ein differentiellen Umsatz erzielt wird. In einer möglichen bevorzugten Ausführung wird ein kleiner Teil des eingesetzten Ruthenium oder Rutheniumverbindungen enthaltenden Katalysators (Betriebskatalysator) aus dem Reaktor entnommen in ein separates Katalysatorbett überführt und mittels einer Modellreaktion durch geeignete Wahl der Kontaktzeit der Aktivitätsverlustes im differentiellen Umsatzbereich ermittelt.

Schwefelverbindungen, die Ruthenium oder Rutheniumverbindungen enthaltende Katalysatoren vergiften (deaktivieren) können sind bevorzugt eine oder mehrere Verbindungen ausgewählt aus der Reihe: H₂SO₄, H₂SO₃, SO₃, SO₂, COS, H₂S, sowie Salze von H₂SO₄ und H₂SO₃. Durch die Reaktion mit der Katalysatoroberfläche werden diese Schwefelverbindungen unter oxidativen Bedingungen bevorzugt in Schwefeloxide überführt, die in die Katalysatoroberfläche bevorzugt über Brückensauerstoff oder Schwefel-Metall-Bindungen eingebaut werden. Unter reduzierenden Bedingungen wird der Schwefel bevorzugt über Schwefel-Metall-Bindungen in die Katalysatoroberfläche eingebaut. Durch das erfindungsgemäße Verfahren kann der durch die Reaktion an der Katalysatoroberfläche immobilisierter Schwefel in Form von Schwefelverbindungen wieder in flüchtige Schwefelverbindungen überführt werden, die von der Katalysatoroberfläche entfernt werden können.

Die nicht oxidative Regeneration wird insbesondere bei einer Temperatur bis 600°C durchgeführt. In einer bevorzugten Ausführung wird die Regeneration bei einer Temperatur von 200°C bis 500°C durchgeführt, in einer besonders bevorzugten Ausführung bei einer Temperatur von 300°C bis 450°C.

Der Regenerationsstrom im nicht oxidativen Verfahrensschritt enthält Halogenwasserstoff, bevorzugt Chlorwasserstoff, wobei der Halogenwasserstoffgehalt bevorzugt 0,1 bis 100 Vol.-% beträgt. In einer bevorzugten Ausführung beträgt der Halogenwasserstoffgehalt des Regenerationsstroms 1 bis 30 Vol.-%, besonders bevorzugt 5 bis 25 Vol.-%. Weitere Bestandteile des Regenerationsstroms können insbesondere Inertgase, wie z.B. Stickstoff oder Argon sein. Der elementare Halogenwasserstoff kann auch durch Substanzen bzw. Substanzmischungen ersetzt werden, die Halogenwasserstoff, d.h. insbesondere Chlor-, Fluor-, Brom-, oder Iodwasserstoff unter den beschriebenen Regenerationsbedingungen freisetzen oder Substanzen bzw. Substanzmischungen, deren Wasserstoff- und Halogenfunktionen eine vergleichbare Wirkung wie elementarer Halogenwasserstoff unter den beschriebenen Regenerationsbedingungen erzielen. Beispielhaft wird hier Phosgen erwähnt.

Der nicht oxidative Regenerationsgasstrom enthält nur einen geringen Anteil von Sauerstoff, d.h. insbesondere höchstens 1 Vol.-%, bevorzugt höchstens 0,2 Vol.-%, besonders bevorzugt höchstens 0,1 Vol.-% Sauerstoff. In einer besonders bevorzugten Ausführung enthält der Regenerationsstrom keinen Sauerstoff.

Erfahrungsgemäß enthalten die aufgeführten zur Regeneration verwendbaren Gase technisch bedingt oft Verunreinigungen (in der Größenordnung <1000 ppm), z.B. Chlor und Wasser deren Anwesenheit nicht nachteilig für die Regeneration ist. Störende Verunreinigungen (z.B. Schwefel in Form von Schwefelverbindungen oder Sauerstoff) sind sinnvollerweise aus dem Regenerationsgas zuvor zu entfernen.

Die Regenerationsdauer der ersten Stufe beträgt bevorzugt 0,5 Stunden bis 100 Stunden. Bei einer unnötig langen Regenerationsdauer kann der Rutheniumgehalt des Katalysators durch die Bildung flüchtiger Rutheniumverbindungen ungewollt herabgesetzt werden. Die optimale Regenerationsdauer hängt insbesondere von der Schwefelbeladung, von der Regenerationstemperatur und von dem Gehalt an Chlorwasserstoff im Regenerationsstrom ab. Die Regeneration kann entweder in einem Schritt oder in mehreren Intervallen erfolgen. Bevorzugt erfolgt die Regeneration intervallweise, wobei zwischen den Zeitintervallen der Schwefelgehalt und/oder die Aktivität des Katalysators bestimmt werden.

Die oxidative Nachbehandlung wird unabhängig von der ersten Stufe insbesondere bei einer Temperatur bis 600°C durchgeführt. In einer bevorzugten Ausführung wird die oxidative Nachbehandlung bei einer Temperatur von 200°C bis 500°C durchgeführt, in einer besonders bevorzugten Ausführung bei einer Temperatur von 200°C bis 400°C.

Der Gasstrom des ersten Prozessschritts der oxidativen Nachbehandlung enthält Dampf, wobei der Dampfgehalt bevorzugt 0,1 bis 100 Vol.-% beträgt. In einer bevorzugten Ausführung beträgt der Dampfgehalt 20 bis 80 Vol.-%, besonders bevorzugt 40 bis 60 Vol.-%. Weitere Bestandteile des Gasstroms können insbesondere Inertgase, wie z.B. Stickstoff oder Argon sein. Der Dampf kann auch durch Substanzen bzw. Substanzmischungen ersetzt werden, die eine vergleichbare Wirkung wie Dampf unter den beschriebenen Bedingungen erzielen. Beispielhaft wird hier Distickstoffmonooxid (N₂O) erwähnt.

Der Gasstrom des ersten Prozessschritts der oxidativen Nachbehandlung enthält nur einen geringen Anteil von Sauerstoff in Form von O₂, d.h. insbesondere höchstens 1 Vol.-%, bevorzugt höchstens 0,2 Vol.-%, besonders bevorzugt höchstens 0,1 Vol.-% Sauerstoff. In einer besonders bevorzugten Ausführung enthält der Gasstrom des ersten Prozessschritts der oxidativen Nachbehandlung keinen Sauerstoff.

Die Dauer des ersten Prozessschritts der oxidativen Nachbehandlung beträgt bevorzugt 0,1 Stunden bis 100 Stunden. Bei einem unnötig langen ersten Prozessschritt kann der Rutheniumgehalt des Katalysators durch Auslaugen ungewollt herabgesetzt werden. Die optimale Dauer des ersten Prozessschritts der Nachbehandlung hängt insbesondere von der Schwefelbeladung, der Menge an entfernten Schwefel vom Katalysator, der Gesamtmenge an Katalysator und dem Anteil an chlorierten oder oxychlorierten Rutheniumverbindungen oder oberflächlich chlorierten oder oxychlorierten Rutheniumverbindungen ab. Die erste Prozessschritts der Nachbehandlung kann entweder in einem Schritt oder in mehreren Intervallen erfolgen.

Der Gasstrom des zweiten Prozessschritts der oxidativen Nachbehandlung enthält Sauerstoff (O₂), wobei der Sauerstoffgehalt bevorzugt 0,1 bis 100 Vol.-% beträgt. In einer bevorzugten Ausführung beträgt der Sauerstoffgehalt 20 bis 80 Vol.-%, besonders bevorzugt 40 bis 60 Vol.- %. Der Sauerstoffgehalt wird während des zweiten Prozessschritts bevorzugt kontinuierlich oder sequentiell, besonders bevorzugt sequentiell erhöht. Bei sequentieller Erhöhung kann diese Erhöhung des Sauerstoffanteils in einer beliebigen Anzahl von Schritten, bevorzugt in 2 bis 10 Schritten, besonders bevorzugt in 2 bis 5 Schritten erfolgen. Weitere Bestandteile des Gasstroms können insbesondere Inertgase, wie z.B. Stickstoff oder Argon sein.

Der Gasstrom des zweiten Prozessschritts der Nachbehandlung enthält nur einen geringen Anteil von Chlor in Form von HCl oder Cl₂, d.h. insbesondere höchstens 1 Vol.-%, bevorzugt höchstens 0,2 Vol.-%, besonders bevorzugt höchstens 0,1 Vol.-% Chlor. In einer besonders bevorzugten Ausführung enthält der Gasstrom des zweiten Prozessschritts der Nachbehandlung weder HCl noch Cl₂.

Die Dauer des zweiten Prozessschritts der Nachbehandlung beträgt bevorzugt 0,1 Stunden bis 100 Stunden. Die optimale Dauer des zweiten Prozessschritts der Nachbehandlung hängt insbesondere von der Gesamtmenge an Katalysator und dem Anteil an chlorierten oder oxychlorierten Rutheniumverbindungen oder oberflächlich chlorierten oder oxychlorierten Rutheniumverbindungen ab. Der zweite Prozessschritt der Nachbehandlung kann entweder in einem Schritt oder in mehreren Intervallen erfolgen.

Erfahrungsgemäß enthalten die aufgeführten zur Nachbehandlung grundsätzlich verwendbaren Gase technisch bedingt oft Verunreinigungen (in der Größenordnung <1000 ppm), z.B. Stickstoff und Kohlenstoffdioxid deren Anwesenheit nicht nachteilig für die Regeneration ist. Störende Verunreinigungen (z.B. Schwefel in Form von Schwefelverbindungen) sind sinnvollerweise aus dem Regenerationsgas zuvor zu entfernen.

In einer besonders bevorzugten Ausführung verbleibt der Katalysator während der Regeneration in dem Reaktor, in dem auch die katalytische Zielreaktion (insbesondere die katalytische Gasphasenoxidation von HCl) durchgeführt wird bzw. wurde. In einer möglichen bevorzugten Ausführung dieser Variante wird die Regeneration im Gegenstrom zur Gas-Strömungsrichtung der Reaktionsgase der genannten Zielreaktion durchgeführt, um eine Verschleppung von ausgetragenen Schwefelkomponenten auf schwach oder unvergiftete Katalysatorschichten zu vermeiden.

Eine bevorzugte Anwendung ist die Regeneration von Ruthenium oder Rutheniumverbindungen enthaltenden Katalysatoren für die katalysierte Gasphasenoxidation von Chlorwasserstoff mit Sauerstoff, da hierbei die erforderliche apparative Umgebung zum Umgang mit Chlorwasserstoff schon vorhanden ist und der Katalysator auch während der Reaktion einer Chlorwasserstoffatmosphäre standhalten muss.

Eine bevorzugte Anwendung ist die Regeneration von Katalysatoren deren Aktivkomponente hauptsächlich aus geträgertem Ruthenium oder Rutheniumverbindungen besteht. Eine besonders bevorzugte Anwendung ist die Regeneration von Ruthenium oder Rutheniumverbindungen enthaltenden Katalysatoren, deren Träger hauptsächlich eine Rutilstruktur aufweist. Eine weitere besonders bevorzugte Anwendung ist die Regeneration von Ruthenium oder Rutheniumverbindungen enthaltenden Katalysatoren, deren Träger Titandioxid, Aluminiumoxid, Zirkonoxid oder Zinndioxid oder deren Mischungen enthält. Eine bevorzugte Anwendung ist die Katalysatorregeneration im Zusammenhang mit einem aus mehreren gekoppelten Schritten bestehenden Verfahren zur Isocyanatherstellung, einschließlich katalysierter Chlorwasserstoffoxidation, dessen einzelne Prozessschritte z. B. grundsätzlich aus der EP 1867631 A1 bekannt sind.

Bevorzugt wird das neue Verfahren mit dem als Deacon-Prozess bekannten katalytischen Gasphasenoxidationsverfahren kombiniert. Hierbei wird Chlorwasserstoff mit Sauerstoff in einer exothermen Gleichgewichtsreaktion zu Chlor oxidiert, wobei Wasserdampf anfällt. Die Reaktionstemperatur beträgt üblicherweise 150 bis 500°C, der übliche Reaktionsdruck beträgt 1 bis 25 bar. Da es sich um eine Gleichgewichtsreaktion handelt, ist es zweckmäßig, bei möglichst niedrigen Temperaturen zu arbeiten, bei denen der Katalysator noch eine ausreichende Aktivität aufweist. Ferner ist es zweckmäßig, Sauerstoff in überstöchiometrischen Mengen zum Chlorwasserstoff einzusetzen. Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohem Druck und dementsprechend bei gegenüber Normaldruck längerer Verweilzeit zu arbeiten.

Die katalytische Chlorwasserstoff-Oxidation kann adiabatisch oder bevorzugt isotherm oder annähernd isotherm, diskontinuierlich, bevorzugt aber kontinuierlich als Fließ- oder Festbettverfahren, bevorzugt als Festbettverfahren, besonders bevorzugt in Rohrbündelreaktoren an Heterogenkatalysatoren bei einer Reaktortemperatur von 180 bis 500°C, bevorzugt 200 bis 400°C, besonders bevorzugt 220 bis 350°C und einem Druck von 1 bis 25 bar (1000 bis 25000 hPa), bevorzugt 1,2 bis 20 bar, besonders bevorzugt 1,5 bis 17 bar und insbesondere 2,0 bis 15 bar durchgeführt werden.

Übliche Reaktionsapparate, in denen die katalytische Chlorwasserstoff-Oxidation durchgeführt wird, sind Festbett- oder Wirbelbettreaktoren. Die katalytische Chlorwasserstoff- Oxidation kann bevorzugt auch mehrstufig durchgeführt werden.

Der Umsatz an Chlorwasserstoff im einfachen Durchgang kann bevorzugt auf 15 bis 90 %, bevorzugt 40 bis 90%, besonders bevorzugt 50 bis 90% begrenzt werden. Nicht umgesetzter Chlorwasserstoff kann nach Abtrennung teilweise oder vollständig in die katalytische Chlorwasserstoff-Oxidation zurückgeführt werden.

Bei der adiabaten oder annähernd adiabaten Fahrweise können auch mehrere, also 2 bis 10, bevorzugt 2 bis 6, besonders bevorzugt 2 bis 5, insbesondere 2 bis 3, in Reihe geschaltete Reaktoren mit zusätzlicher Zwischenkühlung eingesetzt werden. Der Chlorwasserstoff kann entweder vollständig zusammen mit dem Sauerstoff vor dem ersten Reaktor oder über die verschiedenen Reaktoren verteilt zugegeben werden. Diese Reihenschaltung einzelner Reaktoren kann auch in einem Apparat zusammengeführt werden. In diesem Fall lässt sich ein bevorzugtes Reinigungsverfahren für den Katalysator besonders einfach als in situ Verfahren realisieren indem ein Reaktor der Reaktorkaskade aus dem Deacon-Verfahren genommen und der darin enthaltende Katalysator der erfindungsgemäßen Regeneration unterzogen wird.

Eine weitere bevorzugte Ausführungsform einer für das Deacon-Verfahren geeigneten Vorrichtung besteht darin, dass man eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit oder Edelstahl eingesetzt werden. Beim bevorzugten Einsatz von Katalysatorformkörpern sollte das Inertmaterial bevorzugt ähnliche äußere Abmessungen haben.

Geeignete bevorzugte Katalysatoren für das Deacon-Verfahren enthalten Rutheniumoxide, Rutheniumchloride oder andere Rutheniumverbindungen. Als Trägermaterialen eignen sich beispielsweise Siliziumdioxid, Graphit, Titandioxid mit Rutil- oder Anatas-Struktur, Zirkondioxid, Aluminiumoxid oder deren Gemische, bevorzugt Titandioxid, Zirkondioxid, Aluminiumoxid oder deren Gemische, besonders bevorzugt γ- oder δ-Aluminiumoxid oder deren Gemische. Geeignete Katalysatoren können beispielsweise durch Aufbringen von Ruthenium(III)chlorid auf den Träger und anschließendes Trocknen oder Trocknen und Kalzinieren erhalten werden. Geeignete Katalysatoren können ergänzend zu einer Rutheniumverbindung auch Verbindungen anderer Edelmetalle, beispielsweise Gold, Palladium, Platin, Osmium, Iridium, Silber, Kupfer oder Rhenium enthalten. Geeignete Katalysatoren können ferner Chrom(III)oxid enthalten.

Zur Dotierung der Katalysatoren eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Formgebung des Katalysators kann nach oder bevorzugt vor der Tränkung des Trägermaterials erfolgen. Als Katalysatorformkörper eignen sich Formkörper mit beliebigen Formen, bevorzugt sind Tabletten, Ringe, Zylinder, Sterne, Wagenräder oder Kugeln, besonders bevorzugt sind Ringe, Zylinder oder Sternstränge als Form. Die Formkörper können anschließend bei einer Temperatur von 100 bis 400°C, bevorzugt 100 bis 300°C beispielsweise unter einer Stickstoff-, Argon- oder Luftatmosphäre getrocknet und gegebenenfalls kalziniert werden. Bevorzugt werden die Formkörper zunächst bei 100 bis 150°C getrocknet und anschließend bei 200 bis 400°C kalziniert.

Eine weitere mögliche Anwendung ist die Regeneration eines Katalysators, der in einem Opferbett dem eigentlichen Katalysator für die Hauptreaktion insbesondere einer Deacon-Reaktion vorgeschaltet ist und diesen insbesondere vor Schwefelverbindungen aber auch vor anderen Katalysatorgiften schützt.

Die folgenden Beispiele veranschaulichen die vorliegende Erfindung ohne sie einzuschränken:

### Beispiele

### Teil 1: Präparation der Katalysatoren

Um die Erfindung veranschaulichen zu können, wurden auf SnO₂ bzw. TiO₂ geträgerte, pelletierte Rutheniumträgerkatalysatoren hergestellt.
**Beispiel 1a:** 200g SnO₂-Pellets (kugelförmig, Durchmesser etwa 1,9 mm, Alfa Aesar) wurden mit einer Lösung aus 9,99g Rutheniumchlorid-n-Hydrat in 33,96 ml H₂O imprägniert und anschließend 1 h lang durchmischt. Der feuchte Feststoff wurde anschließend bei 60°C im Muffelofen (Luft) für 4 h getrocknet und darauf für 16 h bei 250 °C kalziniert.
**Beispiel 1b:** 100g TiO₂-Pellets (zylindrisch, Durchmesser etwa 2 mm, Länge 2 bis 10 mm, Saint-Gobain) wurden mit einer Lösung aus Rutheniumchlorid-n-Hydrat in H₂O imprägniert, so dass der theoretische Ru-Gehalt 3 Gew.-% betrug. Die so erhaltenen feuchten Pellets wurden über Nacht bei 60 °C getrocknet und im trockenen Zustand unter Stickstoffspülung in eine Lösung aus NaOH und 25 % Hydrazinhydratlösung in Wasser eingebracht und 1 h stehen gelassen. Überschüssiges Wasser wurde anschließend abgedampft. Die feuchten Pellets wurden für 2 h bei 60 °C getrocknet und anschließend mit 4x 300 g Wasser gewaschen. Die so erhaltenen feuchten Pellets wurden im Muffelofen (Luft) für 20 min. bei 120 °C getrocknet und darauf für 3 h bei 350 °C kalziniert.

### Teil 2: Vergiftung der Katalysatoren mit Schwefelverbindungen

Um die Erfindung veranschaulichen zu können, wurde ein Teil der präparierten Katalysatorpellets gezielt mit Schwefel in Form der Schwefelverbindung SO₂ vergiftet. Die Bezeichnung der Katalysatoren nach der Vergiftung und die wichtigsten Merkmale der Vergiftungsläufe können auch der Tab. 2 entnommen werden.
**Beispiel 2a:** 0,5 g der gemäß Beispiel 1a präparierten Katalysatorpellets wurden in einem Quarzreaktionsrohr (Durchmesser 10 mm) vorgelegt und bei 320°C für 24 Stunden mit einem Gasgemisch 1 (bestehend aus 2 L/h Chlorwasserstoff, 1 L/h Sauerstoff, 2 L/h Stickstoff und 40 ppm SO₂) durchströmt.
**Beispiel 2b:** 0,5 g der gemäß Beispiel 1b präparierten Katalysatorpellets wurden in einem Quarzreaktionsrohr (Durchmesser 10 mm) vorgelegt und bei 320°C für 24 Stunden mit einem Gasgemisch 1 (bestehend aus 2 L/h Chlorwasserstoff, 1 L/h Sauerstoff, 2 L/h Stickstoff und 40 ppm SO₂) durchströmt.
**Beispiel 2c:** 19,5 g eines Rutheniumträgerkatalysators 1c (TiO₂-Träger wurden in einen Nickelreaktionsrohr (Durchmesser 16 mm) vorgelegt und für mehr als 20.000 h bei variablen Temperaturen mit einem Gasgemisch (bestehend aus 1 mol/h HCl, 2 mol/h O₂, 2 mol/h N₂) durchströmt. und über diese Zeit mit einer unbekannten Zusammensetzung und Menge an Schwefelkomponenten beladen.

**Tab. 1: Bezeichnung der mit Schwefel vergifteten Katalysatoren und die wichtigsten Merkmale der Vergiftungsläufe.**

| **Bezeichnung der Katalysatorpellets** | | **Vergiftungsbedingungen** | | |
|---|---|---|---|---|
| **nach der Vergiftung** | **vor der Vergiftung** | **Komponente** | **Dauer [h]** | **SO₂ [ppm]** |
| 2a | 1a | SO₂ | 24 | 40 |
| 2b | 1b | SO₂ | 24 | 40 |
| 2c | 1c | SO₂ | 24 | 40 |

### Beispiel 3: Anwenden der Regenerationsbedingungen aus WO 2009 118 095 A3 (Regenerationsmethode 1) auf Rutheniumträgerkatalysatoren (SnO₂-Träger und TiO₂-Träger) - Vergleichsbeispiel

0,5 g der unvergifteten Katalysatorpellets mit der Bezeichnung 1a und jeweils 0,5 g der nach Beispiel 2 vergifteten Katalysatorpellets mit der Bezeichnung 2a, 2b und 2c wurden in einen Quarzreaktionsrohr (Durchmesser 10 mm) vorgelegt und nach Aufheizen in Stickstoff (unvergiftet) zunächst einem Aktivitätstest unterzogen und dafür bei 320°C für 18 Stunden mit einem Gasgemisch 2 (bestehend aus 2 L/h HCl, 8 L/h O₂ und 10 L/h N₂) durchströmt. Anschließend wurden diese Proben einer einmaligen Regeneration unterworfen. Die Ansätze wurden für 16 h bei 380°C mit dem Gasgemisch 4 (bestehend aus 2 L/h HCl und 8 L/h N₂) durchströmt. Im Anschluss wurde die Temperatur unter Regenerationsbedingungen auf 320 °C gesenkt und die Ansätze (1aR1, 2aR1, 2bR1, 2cR1) für 4 h mit Gasgemisch 3 (bestehend aus 2 L/h HCl, 8 L/h O₂ und 10 L/h N₂) durchströmt und die Aktivität bestimmt.

### Beispiel 4: Anwenden der Regenerationsbedingungen aus WO 2010 076 296 A1 (Regenerationsmethode 2) auf Rutheniumträgerkatalysatoren (SnO₂-Träger und TiO₂-Träger) - Vergleichsbeispiel

0,5 g der unvergifteten Katalysatorpellets mit der Bezeichnung 1a und jeweils 0,5 g der nach Beispiel 2 vergifteten Katalysatorpellets mit der Bezeichnung 2a, 2b und 2c wurden in einen Quarzreaktionsrohr (Durchmesser 10 mm) vorgelegt und nach Aufheizen in Stickstoff (unvergiftet) zunächst einem Aktivitätstest unterzogen und dafür bei 320°C für 18 Stunden mit einem Gasgemisch 5 (bestehend aus 2 L/h HCl, 1 L/h O₂) durchströmt. Anschließend wurden diese Proben einer einmaligen Regeneration unterworfen. Die Ansätze wurden für 12 h bei 400°C mit dem Gasgemisch 6 (bestehend aus 1,54 L/h HCl und 1,54 L/h N₂) durchströmt. Danach wurden die Ansätze für 0,5 h bei 400°C mit dem Gasgemisch 7 (bestehend aus 3,08 L/h künstlicher Luft: 21 % O₂, 79 % N₂) durchströmt/kalziniert. Im Anschluss wurde die Temperatur im Gasgemisch 7 auf 320 °C gesenkt und die Ansätze (1aR2, 2aR2, 2bR2, 2cR2) für 24 h mit Gasgemisch 5 (bestehend aus 2 L/h HCl, 1 L/h O₂) durchströmt und die Aktivität bestimmt.

### Beispiel 5: Anwenden der neuen Regenerationsbedingungen (Regenerationsmethode 3) auf Rutheniumträgerkatalysatoren (SnO₂- Träger und TiO₂- Träger)

0,5 g der unvergifteten Katalysatorpellets mit der Bezeichnung 1a und jeweils 0,5 g der nach Beispiel 2 vergifteten Katalysatorpellets mit der Bezeichnung 2a, 2b, 2c wurden in einen Quarzreaktionsrohr (Durchmesser 10 mm) vorgelegt und nach Aufheizen in Stickstoff (unvergiftet) zunächst einem Aktivitätstest unterzogen und dafür bei 320°C für 18 Stunden mit einem Gasgemisch 8 (bestehend aus 2 L/h HCl, 1 L/h O₂ und 2 L/h N₂) durchströmt. Anschließend wurden diese Proben einer einmaligen Regeneration unterworfen. Die Ansätze wurden für 16 h bei 380°C mit dem Gasgemisch 9 (bestehend aus 2 L/h HCl und 6,67 L/h N₂) durchströmt. Im Anschluss wurde die Temperatur unter Regenerationsbedingungen auf 260 °C gesenkt und für 4 h mit Gasgemisch 10 (bestehend aus Dampf) durchströmt. Anschließend wird bei 260 °C folgende konsekutive, oxidative Behandlung durchgeführt: für 0,5 h Gasgemisch 11 (bestehend aus 0,33 L/h O₂ und 2 L/h N₂), für 0,5 h Gasgemisch 12 (bestehend aus 0,66 L/h O₂ und 2 L/h N₂), für 1 h Gasgemisch 13 (bestehend aus 1,33 L/h O₂ und 2 L/h N₂), und für 2 h Gasgemisch 14 (bestehend aus 2 L/h O₂ und 2 L/h N₂). Im Anschluss wurde die Temperatur im Gasgemisch 8 auf 320 °C erhöht und die Ansätze (1aR3, 2aR3, 2bR3, 2cR3) für 24 h mit Gasgemisch 8 (bestehend aus 2 L/h HCl, 1 L/h O₂ und 2 L/h N₂) durchströmt und die Aktivität bestimmt.

### Beispiel 6: Anwenden der neuen Regenerationsbedingungen (Regenerationsmethode 3) auf Rutheniumträgerkatalysatoren (SnO₂- Träger und TiO₂-Träger)

0,5 g der nach Beispiel 2 vergifteten Katalysatorpellets mit der Bezeichnung 2a und 2b wurden in einen Quarzreaktionsrohr (Durchmesser 10 mm) vorgelegt und einer einmaligen Regeneration unterworfen. Die Ansätze wurden für 16 h bei 380°C mit dem Gasgemisch 9 (bestehend aus 2 L/h HCl und 6,67 L/h N₂) durchströmt. Im Anschluss wurde die Temperatur unter Regenerationsbedingungen auf 260 °C gesenkt und für 4 h mit Gasgemisch 10 (bestehend aus Dampf) durchströmt. Anschließend wurde bei 260 °C folgende konsekutive, oxidative Behandlung durchgeführt: für 0,5 h Gasgemisch 11 (bestehend aus 0,33 L/h O₂ und 2 L/h N₂), für 0,5 h Gasgemisch 12 (bestehend aus 0,66 L/h O₂ und 2 L/h N₂), für 1 h Gasgemisch 13 (bestehend aus 1,33 L/h O₂ und 2 L/h N₂), und für 2 h Gasgemisch 14 (bestehend aus 2 L/h O₂ und 2 L/h N₂). Im Anschluss wurde die Temperatur im Gasgemisch 8 auf 320 °C erhöht und die Ansätze (1aR3, 2aR3, 2bR3) für 24 h mit Gasgemisch 8 (bestehend aus 2 L/h HCl, 1 L/h O₂ und 2 L/h N₂) durchströmt und die Aktivität bestimmt.

### Beispiel 7: Anwenden der Regenerationsbedingungen basierend auf WO 2009 118 095 A3 (Regenerationsmethode 3) auf Rutheniumträgerkatalysatoren (SnO₂- Träger und TiO₂-Träger) - Vergleichsbeispiel

0,5 g der nach Beispiel 2 vergifteten Katalysatorpellets mit der Bezeichnung 2a und 2b wurden in einen Quarzreaktionsrohr (Durchmesser 10 mm) vorgelegt und einer einmaligen Regeneration unterworfen. Die Ansätze wurden für 16 h bei 380°C mit dem Gasgemisch 9 (bestehend aus 2 L/h HCl und 6,67 L/h N₂) durchströmt. Im Anschluss wurde die Temperatur im Gasgemisch 8 auf 320 °C gesenkt und die Ansätze (2aR4, 2bR4) für 24 h mit Gasgemisch 8 (bestehend aus 2 L/h HCl, 1 L/h O₂ und 2 L/h N₂) durchströmt und die Aktivität bestimmt (siehe Tabelle 2).

**Tab. 2:**

| **Ansatz** | **Relative Aktivität vor Regeneration*** | **Relative Aktivität nach Regeneration** | **HCl [L/ h]** | **O₂ [L/ h]** | **N₂ [L/h]** | **S-Gehalt vor der Regeneration [ppm]** | **S-Gehalt nach der Regeneration [ppm]** | **Regenerationsmethode** |
|---|---|---|---|---|---|---|---|---|
| 1aR1 | 1 | 1,07^{#} | 2 | 8 | 10 | - | - | 1 |
| 2aR1 | 1 | 1,04^{#} | 2 | 8 | 10 | - | - | 1 |
| 2bR1 | 1 | 1,16^{#} | 2 | 8 | 10 | - | - | 1 |
| 2cR1 | 1 | 1,57^{#} | 2 | 8 | 10 | - | - | 1 |
| 1aR2 | 0,48 | 0,81^{#} | 2 | 1 | 0 | - | - | 2 |
| 2aR2 | 0,44 | 0,96^{#} | 2 | 1 | 0 | - | - | 2 |
| 2bR2 | 0,62 | 0,89^{#} | 2 | 1 | 0 | - | - | 2 |
| 2cR2 | 0,66 | 0,90^{#} | 2 | 1 | 0 | - | - | 2 |
| 1aR3 | 0,39 | 1,15^{#} | 2 | 1 | 2 | - | - | 3 |
| 2aR3 | 0,46 | 1,12^{#} | 2 | 1 | 2 | - | - | 3 |
| 2bR3 | 0,61 | 0,89^{#} | 2 | 1 | 2 | - | - | 3 |
| 2cR3 | 0,67 | 1,11^{#} | 2 | 1 | 2 | - | - | 3 |
| 2aR4 | - | 0,99⁺ | 2 | 1 | 2 | 6600 | 5300 | 3 |
| 2bR4 | - | 0,89⁺ | 2 | 1 | 2 | 820 | 530 | 3 |
| 2aR5 | - | 0,39⁺ | 2 | 1 | 2 | 6600 | 6000 | 1 |
| 2bR5 | - | 0,39⁺ | 2 | 1 | 2 | 820 | 600 | 1 |

| | | | | | | | | |
|---|---|---|---|---|---|---|---|---|
| *Bezogen auf die Probe 1aR1 für alle 1a Proben, bezogen auf die Probe 2aR1 für alle 2a Proben, bezogen auf die Probe 2bR1 für alle 2b Proben, bezogen auf die Probe 2cR1 für alle 2c Proben. ^{#} Bezogen auf die Aktivität der entsprechenden Probe vor der Regeneration ⁺ Bezogen auf die Aktivität der entsprechenden Probe vor der Vergiftung | | | | | | | | |

### Schlussfolgerungen:

### Beispiel 3:

Die Regenerationsmethode 1 führt bei einem niedrigen HCl : O₂ Verhältnis (1:4) bei dem frisch präpariertem und vergiftetem SnO₂-geträgertem Katalysator (2aR1) zu einem leichten Anstieg der Aktivität (+4 %) in Bezug auf den vergifteten Katalysator. Bei dem frisch präpariertem und vergiftetem TiO₂-geträgertem Katalysator (2aR1) führt die Regenerationsmethode 1 zu einem stärkerem Anstieg der Aktivität (+16 %) in Bezug auf den vergifteten Katalysator. Bei dem lange in der HCl-Oxidation betriebenen und vergifteten TiO₂-geträgertem Katalysator (2cR1) führt die Regenerationsmethode 1 zu einem starken Anstieg der Aktivität (+57 %) in Bezug auf den vergifteten Katalysator. Auch bei dem frisch präpariertem und unvergiftetem SnO₂-geträgertem Katalysator (1aR1) erhöht sich die Aktivität leicht (+7 %) in Bezug auf die Anfangsaktivität nach der Regenerationsmethode 1.

Somit erweist sich die Regenerationsmethode 1 als eine geeignete Methode, um Rutheniumträgerkatalysatoren zu regenerieren, die bei einem niedrigen HCl : O₂ Verhältnis (1:4) betrieben und wieder angefahren wurden.

### Beispiel 4:

Bei den Versuchen mit der Regenerationsmethode 2 muss darauf hingewiesen werden, dass die Anfangsaktivitäten aufgrund des höheren HCl zu O₂ Verhältnisses (2:1) im Vergleich zu dem niedrigen HCl : O₂ Verhältnis (1:4) bei der Regenerationsmethode 1 viel geringer sind. Dieses Verhalten von Rutheniumträgerkatalysatoren bei höherem HCl zu O₂ Verhältnis ist bekannt.

Die Regenerationsmethode 2 führt bei allen untersuchten Rutheniumträgerkatalysatoren zu einer Verringerung der Aktivität (-4 bis -19 %) in Bezug auf den vergifteten Katalysator und die Anfangsaktivität im unvergifteten Katalysator. Somit erweist sich die Regenerationsmethode 2 nicht als eine geeignete Methode, um Rutheniumträgerkatalysatoren zu regenerieren.

### Beispiel 5:

Auch bei den Versuchen mit der Regenerationsmethode 3 muss darauf hingewiesen werden, dass die Anfangsaktivitäten aufgrund des höheren HCl zu O₂ Verhältnisses (2:1) im Vergleich zu dem niedrigen HCl zu O₂ Verhältnis (1:4) bei der Regenerationsmethode 1 viel geringer sind.

Jedoch führt die Regenerationsmethode 3 bei dem frisch präpariertem und vergiftetem SnO₂-geträgertem Katalysator (2aR1) zu einem stärkerem Anstieg der Aktivität (+12 %) in Bezug auf den vergifteten Katalysator. Bei dem frisch präpariertem und vergiftetem TiO₂-geträgertem Katalysator (2aR1) führt die Regenerationsmethode 3 zu einer Verringerung der Aktivität (-11 %) in Bezug auf den vergifteten Katalysator. Bei dem lange in der HCl-Oxidation betriebenen und vergifteten TiO₂-geträgertem Katalysator (2cR1) führt die Regenerationsmethode 3 jedoch wieder zu einem stärkeren Anstieg der Aktivität (+11 %) in Bezug auf den vergifteten Katalysator. Auch bei dem frisch präpariertem und unvergiftetem SnO₂-geträgertem Katalysator (1aR1) erhöht sich die Aktivität stärker (+15 %) in Bezug auf die Anfangsaktivität nach der Regenerationsmethode 3.

Somit erweist sich die Regenerationsmethode 3 als eine geeignete Methode, um Rutheniumträgerkatalysatoren zu regenerieren, die bei einem hohem HCl : O₂ Verhältnis (2:1) betrieben und wieder angefahren wurden.

### Beispiel 6 und 7:

In diesen beiden Beispielen wurden die Regenerationsmethode 1 und die Regenerationsmethode 3 bei einem hohen HCl zu O₂ Verhältnis (2:1) in Bezug auf Schwefelentfernung und Aktivität nach der Regeneration verglichen.

Zunächst einmal zeigt sich, dass der SnO₂-geträgerte Katalysator viel mehr Schwefel durch die Vergiftung aufgenommen hat (6600 ppm), als der TiO₂-geträgerte Katalysator (820 ppm). Nach der Regenerationsmethode 1 hat sich der Schwefelanteil im SnO₂-geträgertem Katalysator um 600 ppm und im TiO₂-geträgertem Katalysator um 220 ppm verringert. Nach der Regenerationsmethode 3 hat sich der Schwefelanteil im SnO₂-geträgertem Katalysator um 1300 ppm und im TiO₂-geträgertem Katalysator um 290 ppm verringert. Somit sind beide Regenerationsmethoden geeignet, um Schwefel von den Rutheniumträgerkatalysatoren zu entfernen, jedoch entfernt die Regenerationsmethode 3 einen größeren Anteil an Schwefel von den Katalysatoren.

Die Regenerationsmethode 3 führt im SnO₂-geträgertem Katalysator zu einer Aktivität von 99% bezogen auf die Anfangsaktivität im unvergifteten Katalysator. Bei dem TiO₂-geträgertem Katalysator führt die Regenerationsmethode 3 zu einer Aktivität von 89 % bezogen auf die Anfangsaktivität im unvergifteten Katalysator. Dem gegenüber führt die Regenerationsmethode 1 im SnO₂-geträgertem Katalysator nur zu einer Aktivität von 39% bezogen auf die Anfangsaktivität im unvergifteten Katalysator. Bei dem TiO₂-geträgertem Katalysator führt die Regenerationsmethode 1 auch nur zu einer Aktivität von 39 % bezogen auf die Anfangsaktivität im unvergifteten Katalysator.

Damit wurde gezeigt, dass die Regenerationsmethode 1 geeignet ist, Schwefel von Rutheniumträgerkatalysatoren zu entfernen und bei einem niedrigem HCl zu O₂ Verhältnis die Katalysatoren zu regenerieren, jedoch ist dies bei einem hohen HCl zu O₂ Verhältnis nicht mehr der Fall.

Dem gegenüber wurde gezeigt, dass die Regenerationsmethode 3 geeignet ist, Schwefel von Rutheniumträgerkatalysatoren zu entfernen und sowohl bei einem niedrigem, als auch bei einem hohen HCl zu O₂ Verhältnis die Katalysatoren zu regenerieren.

## Patentansprüche

1. Verfahren zur Regeneration eines Ruthenium oder Rutheniumverbindungen enthaltenden Katalysators, der durch Schwefel in Form von Schwefelverbindungen vergiftet ist, **dadurch gekennzeichnet, dass** man den Katalysator gegebenenfalls bei erhöhter Temperatur einer Behandlung mit einem Halogenwasserstoff, insbesondere Chlorwasserstoff enthaltenden Gasstrom unter nicht oxidativen Bedingungen und zusätzlich, gegebenenfalls bei verringerter Temperatur, einer mindestens zweistufigen oxidativen Nachbehandlung unterzogen wird, wobei in einem ersten Prozessschritt der Katalysator durch Behandlung mit einem Dampf enthaltenden Gasstrom teilweiseoxidiert und in einem zweiten Prozessschritt der Katalysator durch Behandlung mit einem Sauerstoff enthaltenden Gasstrom, dessen Sauerstoff-Konzentration bevorzugt kontinuierlich oder sequentiell erhöht wird, weiter oxidiert wird, bevorzugt vollständig oxidiert wird.

2. Verfahren nach Anspruch 1, **dadurch gekennzeichnet, dass** die nicht oxidative Regeneration bei einer Temperatur bis 600°C, bevorzugt von 200°C bis 500°C, besonders bevorzugt von 300°C bis 450°C durchgeführt wird.

3. Verfahren nach Anspruch 1 oder 2, **dadurch gekennzeichnet, dass** die Regeneration bei einem Druck von bis zu 20 bar, bevorzugt von bis zu 5 bar, besonders bevorzugt von bis zu 1,5 bar durchgeführt wird.

4. Verfahren nach einem der Ansprüche 1 bis 3, **dadurch gekennzeichnet, dass** die nicht oxidative Regeneration bei einem Halogenwasserstoffgehalt von 0,1 bis 100 Vol.-%, bevorzugt 1 bis 30 Vol.-%, besonders bevorzugt 5 bis 25 Vol.-% durchgeführt wird.

5. Verfahren nach einem der Ansprüche 1 bis 4, **dadurch gekennzeichnet, dass** die oxidative Nachbehandlung bei einer Temperatur bis 600°C, bevorzugt im Bereich von 200°C bis 500°C, besonders bevorzugt im Bereich von 200°C bis 400°C durchgeführt wird.

6. Verfahren nach Anspruch 1 oder 5, **dadurch gekennzeichnet, dass** die oxidative Nachbehandlung bei einem Druck von bis zu 20 bar, bevorzugt von bis zu 5 bar, besonders bevorzugt von bis zu 1,5 bar durchgeführt wird.

7. Verfahren nach einem der Ansprüche 1 bis 6, **dadurch gekennzeichnet, dass** der erste Prozessschritt der oxidativen Nachbehandlung bei einem Dampfgehalt von 0,1 bis 100 Vol.-%, bevorzugt 20 bis 80 Vol.-%, besonders bevorzugt 40 bis 60 Vol.-% durchgeführt wird.

8. Verfahren nach einem der Ansprüche 1 bis 7, **dadurch gekennzeichnet, dass** der zweite Prozessschritt der oxidativen Nachbehandlung bei einem Sauerstoffgehalt im Bereich von 0,1 bis 100 Vol. %, bevorzugt von 1 bis 80 Vol.-%, besonders bevorzugt von 10 bis 50 Vol.-% durchgeführt wird.

9. Verfahren nach einem der Ansprüche 1 bis 8, **dadurch gekennzeichnet, dass** der Ruthenium oder Rutheniumverbindungen enthaltende Katalysator ein Katalysator auf Basis von Rutheniumhalogeniden, insbesondere Rutheniumchloriden, Rutheniumoxidhalogeniden, insbesondere Rutheniumoxidchloriden, oder Rutheniumoxiden, die einzeln oder in Mischung vorliegen, ist.

10. Verfahren nach einem der Ansprüche 1 bis 9, **dadurch gekennzeichnet, dass** die nicht oxidative Regeneration der ersten Stufe über einen Zeitraum von 0,5 Stunden bis 100 Stunden durchgeführt wird.

11. Verfahren nach einem der Ansprüche 1 bis 10, **dadurch gekennzeichnet, dass** die Schritte der oxidativen Nachbehandlung jeweils unabhängig voneinander über einen Zeitraum von 0,1 Stunden bis 100 Stunden durchgeführt werden.

12. Verfahren nach einem der Ansprüche 1 bis 11, **dadurch gekennzeichnet, dass** die Regeneration und die oxidative Nachbehandlung im selben Reaktionsraum erfolgen, in dem der Katalysator zur Durchführung der Reaktion benützt wird, die vom Katalysator katalysiert wird.

13. Verfahren nach Anspruch 12, **dadurch gekennzeichnet, dass** der Regenerationsgasstrom und die Ströme der oxidativen Nachbehandlung entgegen der Strömungsrichtung der Reaktionskomponenten der katalysierten Reaktion im Reaktionsraum über den Katalysator geleitet werden.

14. Verfahren nach einem der Ansprüche 1 bis 13, **dadurch gekennzeichnet, dass** der Katalysator ein Katalysator für die Gasphasenoxidation von Chlorwasserstoff mit Sauerstoff ist.

15. Verfahren nach einem der Ansprüche 1 bis 14, **dadurch gekennzeichnet, dass** nach der Regeneration die Gasphasenoxidation von Chlorwasserstoff mit Sauerstoff mit einem maximalem HCl zu Sauerstoff Verhältnis von 1:1, bevorzugt von 1,5:1, besonders bevorzugt von 2:1 wieder angefahren wird.

16. Verfahren nach einem der Ansprüche 1 bis 15, **dadurch gekennzeichnet, dass** vor der Regeneration die Gasphasenoxidation von Chlorwasserstoff mit Sauerstoff mit einem maximalem HCl zu Sauerstoff Verhältnis von 1:1, bevorzugt von 1,5:1, besonders bevorzugt von 2:1 wieder betrieben wurde.

17. Verfahren nach einem der Ansprüche 1 bis 16, **dadurch gekennzeichnet, dass** die Regeneration und die oxidative Nachbehandlung intervallweise erfolgen, wobei zwischen den Zeitintervallen der Schwefelgehalt und/oder die Aktivität des Katalysators bestimmt wird.

18. Verfahren nach einem der Ansprüche 1 bis 17, **dadurch gekennzeichnet, dass** die Schwefelverbindungen eine oder mehrere Verbindungen ausgewählt aus der Reihe: H₂SO₄, H₂SO₃, SO₃, SO₂, COS, H₂S, Salze von H₂SO₄ und H₂SO₃ sind.

19. Verfahren zur katalysierten Gasphasenoxidation von Chlorwasserstoff mit Sauerstoff unter Verwendung von auf Ruthenium oder Rutheniumverbindungen basierendem Katalysator, **dadurch gekennzeichnet, dass** der Katalysator ab einem vorgegebenen Wert für den Verlust seiner katalytischen Aktivität einem Regenerationsverfahren nach einem der Ansprüche 1 bis 18 unterzogen wird.
